# EUROPEAN PATENT APPLICATION

(11) **EP 4 765 607 A1**
(43) Date of publication of application: **24.06.2026**
(21) Application number: 25223588.2
(22) Date of filing: 15.12.2025
(51) Int. Cl.: H02M 1/12, H02M 7/487, H02M 1/32, H02M 1/00, H02M 7/483

(54) **POWER CONVERSION APPARATUS**

(30) Priority: 18.12.2024 CN 202411884405
(71) Applicant: Huawei Technologies Co., Ltd., Shenzhen, Guangdong 518129 (CN)
(72) Inventor: ZHANG, Yaojia, 518129 Shenzhen, Guangdong (CN); YU, Xinyu, 518129 Shenzhen, Guangdong (CN); YANG, Peng, 518129 Shenzhen, Guangdong (CN); GAO, Shen, 518129 Shenzhen, Guangdong (CN); TANG, Yunyu, 518129 Shenzhen, Guangdong (CN); XIN, Kai, 518129 Shenzhen, Guangdong (CN)
(74) Representative: Maiwald GmbH

(57) **Abstract**

A power conversion apparatus provided in this application includes a direct current end, a positive direct current bus, a negative direct current bus, a positive bus capacitor, a negative bus capacitor, at least three inverter bridge arms, a switch unit, a controller, and filter inductors, filter capacitors, and alternating current ends that correspond to the at least three inverter bridge arms. A third end of each inverter bridge arm sequentially passes through a filter inductor, a filter capacitor, and a switch unit that correspond to each inverter bridge arm, and is connected to a bus midpoint. The controller is configured to: when a voltage of a power grid is less than or equal to a first voltage threshold, control the switch unit to be turned off or impedance of the switch unit to be increased; and after the switch unit is turned off or the impedance of the switch unit is increased, control a modulated wave of each inverter bridge arm to be a modulated wave obtained by superimposing a first common-mode modulation signal on an initial modulated wave of each inverter bridge arm, to increase amplitude of the modulated wave of each inverter bridge arm. In this way, this can balance losses of switching transistors of the inverter bridge arms, and improve common-mode oscillation caused by a change of the modulated wave.

## Description

### TECHNICAL FIELD

This application relates to the field of power supply technologies, and in particular, to a power conversion apparatus.

### BACKGROUND

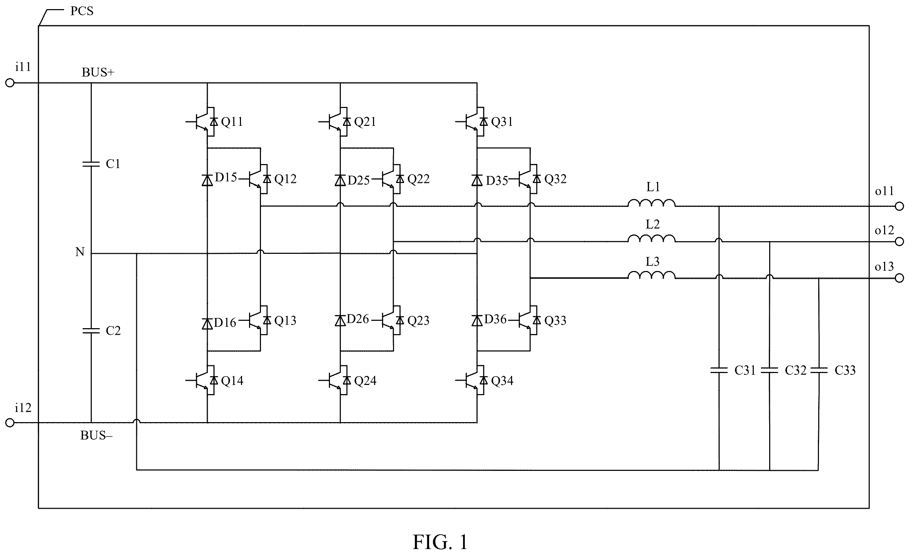

When a low voltage ride-through fault occurs in a power grid, amplitude of a three-phase grid connection voltage output by a power conversion system (PCS) is reduced, and consequently, a modulation index (that is, a ratio of a voltage of the power grid to a semi-direct current bus voltage) is reduced. Because the modulation index is positively correlated with amplitude of a modulated wave of an inverter bridge arm of the PCS, when the modulation index is reduced, the amplitude of the modulated wave of the inverter bridge arm of the PCS is also reduced, so that time for outputting a positive level or a negative level by the inverter bridge arm is reduced, and time for outputting a zero level by the inverter bridge arm is increased. A PCS using a neutral point clamped (NPC) three-level inversion topology shown in FIG. 1 is used as an example. For an inverter bridge arm including switching transistors Q11 to Q14 and diodes D15 and D16, when a voltage of a power grid is in a positive half cycle, a decrease in time for the inverter bridge arm to output a positive level corresponds to a decrease in turn-on time of the switching transistor Q11, and an increase in time for the inverter bridge arm to output a zero level corresponds to increases in turn-on time of the diode D15 and turn-on time of the switching transistor Q12 of a zero-level loop; and when the voltage of the power grid is in a negative half cycle, a decrease in time for the inverter bridge arm to output a negative level corresponds to a decrease in turn-on time of the switching transistor Q14, and an increase in time for the inverter bridge arm to output a zero level corresponds to increases in turn-on time of the diode D16 and turn-on time of the switching transistor Q13 of the zero-level loop. In view of this, it can be learned that, when the low voltage ride-through fault occurs in the power grid, losses of switch components, of inverter bridge arms, of zero-level loops may be increased, and consequently, the losses of the switch components of the inverter bridge arms are unbalanced. The zero-level loop is a current loop corresponding to that an inverter bridge arm outputs a zero level.

### SUMMARY

This application provides a power conversion apparatus, which can balance losses of switching transistors of inverter bridge arms, and improve common-mode oscillation caused by a change of a modulated wave.

According to a first aspect, this application provides a power conversion apparatus. The power conversion apparatus includes a direct current end, a positive direct current bus, a negative direct current bus, a positive bus capacitor, a negative bus capacitor, at least three inverter bridge arms, a switch unit, a controller, and filter inductors, filter capacitors, and alternating current ends that correspond to the at least three inverter bridge arms. The direct current end is configured to connect to a photovoltaic module or an energy storage battery, and the alternating current ends corresponding to the at least three inverter bridge arms are configured to connect to a power grid. The positive direct current bus and the negative direct current bus are connected to the direct current end, and the positive bus capacitor and the negative bus capacitor are sequentially connected in series between the positive direct current bus and the negative direct current bus. A first end and a second end of each of the at least three inverter bridge arms are respectively connected to the positive direct current bus and the negative direct current bus, a third end of each inverter bridge arm is connected to a bus midpoint after sequentially passing through a filter inductor and a filter capacitor that correspond to each inverter bridge arm, and the switch unit, and the bus midpoint is a connection point between the positive bus capacitor and the negative bus capacitor. Serial connection points of the filter inductors and the filter capacitors corresponding to the at least three inverter bridge arms are respectively configured to connect the alternating current ends corresponding to the at least three inverter bridge arms. The controller is configured to: when a voltage of the power grid is less than or equal to a first voltage threshold, which indicates that a low voltage ride-through fault occurs in the power grid, control the switch unit to be turned off or impedance of the switch unit to be increased; and after the switch unit is turned off or the impedance of the switch unit is increased, control a modulated wave of each inverter bridge arm to be a modulated wave obtained by superimposing a first common-mode modulation signal on an initial modulated wave of each inverter bridge arm, to increase amplitude of the modulated wave of each inverter bridge arm. The initial modulated wave is a modulated wave of each inverter bridge arm during normal operation of the power conversion apparatus.

In this implementation, for the power conversion apparatus, the switch unit is added to a common-mode branch (which is located between the third end of each inverter bridge arm and the bus midpoint and includes a branch of the filter inductor and the filter capacitor that correspond to each inverter bridge arm). When the low voltage ride-through fault occurs in the power grid, the switch unit is first controlled to be turned off or the impedance of the switch unit is first controlled to be increased, to disconnect the common-mode branch or increase impedance of the common-mode branch, thereby directly avoiding generation of common-mode oscillation or mitigating a common-mode oscillation phenomenon. In addition, after the switch unit is turned off or the impedance of the switch unit is increased, the amplitude of the modulated wave of each inverter bridge arm is increased by superimposing the common-mode modulation signal on the initial modulated wave of each inverter bridge arm. Herein, the modulated wave of the inverter bridge arm is a modulated wave of a reference switching transistor of the inverter bridge arm, and the reference switching transistor is a switching transistor that is of the inverter bridge arm and that is directly connected to the positive direct current bus or the negative direct current bus. Specifically, when the voltage of the power grid is in a positive half cycle, the reference switching transistor is the switching transistor that is of the inverter bridge arm and that is directly connected to the positive direct current bus; and when the voltage of the power grid is in a negative half cycle, the reference switching transistor is the switching transistor that is of the inverter bridge arm and that is directly connected to the negative direct current bus. Amplitude of the modulated wave of the reference switching transistor determines duration for outputting a positive level or a negative level by the inverter bridge arm. Specifically, larger amplitude of the modulated wave of the reference switching transistor indicates a larger duty cycle of the reference switching transistor and longer turn-on duration of the reference switching transistor, that is, longer duration for outputting the positive level or the negative level by the inverter bridge arm; and smaller amplitude of the modulated wave of the reference switching transistor indicates a smaller duty cycle of the reference switching transistor and shorter turn-on duration of the reference switching transistor, that is, shorter duration for outputting the positive level or the negative level by the inverter bridge arm. For the three-level power conversion apparatus, when the voltage of the power grid is in the positive half cycle, the inverter bridge arm outputs either the positive level or a zero level; and when the voltage of the power grid is in the negative half cycle, the inverter bridge arm outputs either the zero level or the negative level. In other words, duration for outputting the zero level by the inverter bridge arm is negatively correlated with the duration for outputting the positive level or the negative level by the inverter bridge arm. Therefore, the power conversion apparatus may increase duration for outputting the positive level or the negative level by each inverter bridge arm by increasing the amplitude of the modulated wave of each inverter bridge arm, and reduce duration for outputting the zero level by each inverter bridge arm. In other words, turn-on duration of a reference switching transistor of each inverter bridge arm can be increased, and turn-on duration of a switching transistor of a zero-level loop of each inverter bridge arm can be reduced, to balance losses of switching transistors of inverter bridge arms. In conclusion, when the low voltage ride-through fault occurs in the power grid, the power conversion apparatus can balance the losses of the switching transistors of the inverter bridge arms, and improve the common-mode oscillation caused by a change of the modulated wave, thereby facilitating stable operation of the power conversion apparatus.

In a possible implementation, the controller is further configured to: when the voltage of the power grid is greater than or equal to a second voltage threshold, which indicates a high voltage ride-through fault occurs in the power grid, control the switch unit to be turned off or the impedance of the switch unit to be increased; and after the switch unit is turned off or the impedance of the switch unit is increased, control the modulated wave of each inverter bridge arm to be a modulated wave obtained by superimposing a second common-mode modulation signal on the initial modulated wave of each inverter bridge arm, to reduce the amplitude of the modulated wave of each inverter bridge arm. The second voltage threshold is greater than the first voltage threshold.

In this implementation, when the high voltage ride-through fault occurs in the power grid, the power conversion apparatus may further first control the switch unit to be turned off or first control the impedance of the switch unit to be increased, to disconnect the common-mode branch or increase the impedance of the common-mode branch, thereby directly avoiding the generation of the common-mode oscillation or mitigating the common-mode oscillation phenomenon. After the switch unit is turned off or the impedance of the switch unit is increased, the amplitude of the modulated wave of each inverter bridge arm is reduced by superimposing the common-mode modulation signal on the initial modulated wave of each inverter bridge arm, to reduce the duration for outputting the positive level or the negative level by each inverter bridge arm, and increase the duration for outputting the zero level by each inverter bridge arm. In other words, the turn-on duration of the reference switching transistor of each inverter bridge arm can be reduced, and the turn-on duration of the switching transistor of the zero-level loop of each inverter bridge arm can be increased, to balance the losses of the switching transistors of the inverter bridge arms. Therefore, when the high voltage ride-through fault occurs in the power grid, the power conversion apparatus can balance the losses of the switching transistors of the inverter bridge arms, and improve the common-mode oscillation caused by the change of the modulated wave, thereby facilitating the stable operation of the power conversion apparatus.

In a possible implementation, the switch unit includes a mechanical switch and a semiconductor switch that are connected in parallel. The controller is configured to: when the voltage of the power grid is less than or equal to the first voltage threshold or greater than or equal to the second voltage threshold, control the mechanical switch to be turned off first, and control the semiconductor switch to be turned off later, to turn off the switch unit.

In this implementation, when a voltage ride-through fault occurs in the power grid, the power conversion apparatus adopts a control mode in which the mechanical switch is turned off earlier than the semiconductor switch, so that the switch unit is turned off, and the common-mode branch is in a disconnected state. Therefore, the common-mode oscillation can be completely solved, and an on-state loss of the semiconductor switch can be effectively reduced, thereby reducing a loss of the power conversion apparatus.

In a possible implementation, the switch unit includes a switch component and an impedance element that are connected in parallel, the switch component includes a mechanical switch or a semiconductor switch, and the impedance element includes an inductor, a capacitor, or a resistor. The controller is configured to: when the voltage of the power grid is less than or equal to the first voltage threshold or greater than or equal to the second voltage threshold, control the switch component to be turned off, to increase the impedance of the switch unit.

In this implementation, the switch unit uses a structure in which the switch component and the impedance element are connected in parallel. When the voltage ride-through fault occurs in the power grid, the power conversion apparatus may increase the impedance of the switch unit only by controlling the switch component to be turned off, to enable the common-mode branch to be in a high impedance state, thereby improving the common-mode oscillation. A control mode is simple and easy to implement.

In a possible implementation, the controller is further configured to: when the voltage of the power grid is greater than the first voltage threshold and less than the second voltage threshold, which indicates that the voltage of the power grid is restored to normal, control the switch unit to be turned on; and after the switch unit is turned on, control the modulated wave of each inverter bridge arm to be the initial modulated wave of each inverter bridge arm.

In this implementation, after the voltage of the power grid is restored to normal, a problem that losses of some switching transistors of each inverter bridge arm increase disappears accordingly, and it is unnecessary to superimpose the common-mode modulation signal on the initial modulated wave of each inverter bridge arm, to enable the common-mode branch to be restored to a conductive state or a low impedance state, so that the power conversion apparatus is restored to an operating state with the voltage of the power grid being normal.

In a possible implementation, the switch unit includes the mechanical switch and the semiconductor switch that are connected in parallel. The controller is configured to: when the voltage of the power grid is greater than the first voltage threshold and less than the second voltage threshold, control the semiconductor switch to be turned on first, and control the mechanical switch to be turned on later, to turn on the switch unit.

In this implementation, after the voltage of the power grid is restored to normal, the power conversion apparatus adopts a control mode in which the mechanical switch is turned on later than the semiconductor switch, so that the switch unit is turned on. In this way, the common-mode branch can be restored to the conductive state, and the on-state loss of the semiconductor switch can be effectively reduced, thereby reducing the loss of the power conversion apparatus.

In a possible implementation, the switch unit includes the switch component and the impedance element that are connected in parallel, the switch component includes the mechanical switch or the semiconductor switch, and the impedance element includes the inductor, the capacitor, or the resistor. The controller is configured to: when the voltage of the power grid is greater than the first voltage threshold and less than the second voltage threshold, control the switch component to be turned on, to turn on the switch unit.

In this implementation, after the voltage of the power grid is restored to normal, the power conversion apparatus may turn on the switch unit by controlling only the switch component to be turned on, so that the common-mode branch is restored to the low impedance state. A control mode is simple and easy to implement.

In a possible implementation, the at least three inverter bridge arms of the power conversion apparatus use an active neutral point clamped (ANPC) three-level inversion topology. Specifically, a fourth end of each inverter bridge arm is connected to the bus midpoint, and each inverter bridge arm includes a first switching transistor, a second switching transistor, a third switching transistor, a fourth switching transistor, a fifth switching transistor, and a sixth switching transistor. The first switching transistor, the second switching transistor, the third switching transistor, and the fourth switching transistor of each inverter bridge arm are sequentially connected in series between the first end and the second end of each inverter bridge arm, and a connection point between the second switching transistor and the third switching transistor of each inverter bridge arm is connected to the third end of each inverter bridge arm. The fifth switching transistor and the sixth switching transistor of each inverter bridge arm are connected in series between a connection point of the first switching transistor and the second switching transistor of each inverter bridge arm and a connection point of the third switching transistor and the fourth switching transistor of each inverter bridge arm, and the connection point of the fifth switching transistor and the sixth switching transistor of each inverter bridge arm is connected to the fourth end of each inverter bridge arm.

In a possible implementation, the at least three inverter bridge arms of the power conversion apparatus use a T-type three-level inversion topology. Specifically, a fourth end of each inverter bridge arm is connected to the bus midpoint, and each inverter bridge arm includes a first switching transistor, a second switching transistor, a third switching transistor, and a fourth switching transistor. The first switching transistor and the second switching transistor of each inverter bridge arm are connected in series between the first end and the second end of each inverter bridge arm, and a connection point between the first switching transistor and the second switching transistor of each inverter bridge arm is connected to the third end of each inverter bridge arm. The third switching transistor and the fourth switching transistor of each inverter bridge arm are reversely connected in series between the third end and the fourth end of each inverter bridge arm.

In a possible implementation, the power conversion apparatus further includes an energy storage element, a seventh switching transistor, and an eighth switching transistor. The seventh switching transistor and the eighth switching transistor are sequentially connected in series between the positive direct current bus and the negative direct current bus, and the energy storage element is connected between the bus midpoint and a connection point between the seventh switching transistor and the eighth switching transistor. The controller is configured to: when a voltage of the positive bus capacitor is greater than a voltage of the negative bus capacitor, control the seventh switching transistor to be turned on for first preset duration and then turned off, and after the seventh switching transistor is turned off, control the eighth switching transistor to be turned on for second preset duration and then turned off, to transfer energy stored in the positive bus capacitor to the negative bus capacitor. Alternatively, the controller is configured to: when a voltage of the positive bus capacitor is less than a voltage of the negative bus capacitor, control the eighth switching transistor to be turned on for third preset duration and then turned off, and after the eighth switching transistor is turned off, control the seventh switching transistor to be turned on for fourth preset duration and then turned off, to transfer energy stored in the negative bus capacitor to the positive bus capacitor.

In this implementation, a circuit including the energy storage element, the seventh switching transistor, and the eighth switching transistor may be understood as a bus voltage balancing circuit. The power conversion apparatus may control turn-on duration of two switching transistors of the bus voltage balancing circuit, to balance the voltage of the positive bus capacitor and the voltage of the negative bus capacitor. In this way, a switching transistor with a lower voltage withstand capability can be selected, thereby reducing costs of the power conversion apparatus.

### BRIEF DESCRIPTION OF DRAWINGS

FIG. 1 is a diagram of a structure of a power conversion system according to the conventional technology;
FIG. 2 is a diagram of an application scenario of a power conversion apparatus according to this application;
FIG. 3 is a diagram of a structure of a power conversion apparatus according to this application;
FIG. 4a is a diagram of another structure of a power conversion apparatus according to this application;
FIG. 4b is a diagram of another structure of a power conversion apparatus according to this application;
FIG. 5 is a diagram of another structure of a power conversion apparatus according to this application; and
FIG. 6 is a diagram of still another structure of a power conversion apparatus according to this application.

### DESCRIPTION OF EMBODIMENTS

A power conversion apparatus provided in this application may be used in a plurality of application fields such as a photovoltaic power generation field, an energy storage and power generation field, a new energy smart microgrid field, and a power transmission and distribution field. The power conversion apparatus provided in this application may be an inverter, a PCS, an uninterruptible power supply (UPS), or the like, and is used in different application scenarios, for example, a photovoltaic power supply scenario, an energy storage and power supply scenario, a photovoltaic-and-storage hybrid power supply scenario, and a UPS power supply scenario. The following provides descriptions by using the energy storage and power supply scenario as an example.

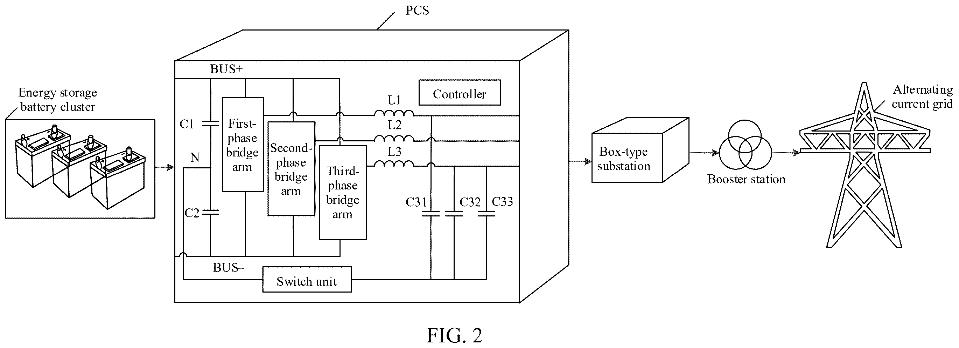

FIG. 2 is a diagram of an application scenario of a power conversion apparatus according to this application. In the energy storage and power supply scenario, the power conversion apparatus provided in this application is a PCS shown in FIG. 2. The PCS includes a direct current end, a positive direct current bus BUS+, a negative direct current bus BUS-, a positive bus capacitor C1, a negative bus capacitor C2, a first-phase bridge arm, a second-phase bridge arm, a third-phase bridge arm, a switch unit, a controller, and filter inductors L1 to L3, filter capacitors C31 to C33, and three-phase alternating current ends that correspond to the first-phase bridge arm to the third-phase bridge arm. The direct current end of the PCS is connected to an energy storage battery cluster, and the three-phase alternating current ends of the PCS are connected to an alternating current power grid sequentially via a box-type substation and a booster station. The positive direct current bus BUS+ and the negative direct current bus BUS- are connected to the direct current end of the PCS, and the positive bus capacitor C1 and the negative bus capacitor C2 are sequentially connected in series between the positive direct current bus BUS+ and the negative direct current bus BUS-. A first end and a second end of each of the first-phase bridge arm, the second-phase bridge arm, and the third-phase bridge arm are respectively connected to the positive direct current bus BUS+ and the negative direct current bus BUS-. A third end of the first-phase bridge arm is connected to the bus midpoint N after sequentially passing through the filter inductor L1 and the filter capacitor C31 that correspond to the first-phase bridge arm, and the switch unit. A third end of the second-phase bridge arm is connected to the bus midpoint N after sequentially passing through the filter inductor L2 and the filter capacitor C32 that correspond to the second-phase bridge arm, and the switch unit. A third end of the third-phase bridge arm is connected to the bus midpoint N after sequentially passing through the filter inductor L3 and the filter capacitor C33 that correspond to the third-phase bridge arm, and the switch unit. The bus midpoint N is a connection point between the positive bus capacitor C1 and the negative bus capacitor C2, and the first-phase bridge arm to the third-phase bridge arm are all inverter bridge arms. A serial connection point between the filter inductor L1 and the filter capacitor C31, a serial connection point between the filter inductor L2 and the filter capacitor C32, and a serial connection point between the filter inductor L3 and the filter capacitor C33 are respectively connected to the three-phase alternating current ends of the PCS.

After the PCS starts to operate, the switch unit is in a turn-on state, and the controller inverts, by controlling the first-phase bridge arm to the third-phase bridge arm, a direct current output by the energy storage battery cluster into an alternating current, and outputs the alternating current to the box-type substation connected to the PCS. The box-type substation performs voltage step-up on an alternating current input by an input end of the box-type substation, and outputs an alternating current obtained through voltage step-up to the booster station. The booster station performs voltage step-up on an alternating current input by an input end of the booster station, to obtain an alternating current that meets a requirement of the alternating current power grid. Therefore, power is supplied to the alternating current power grid.

In a process in which the PCS stably supplies the power to the alternating current power grid, when a voltage of the alternating current power grid is less than or equal to a first voltage threshold, which indicates that a low voltage ride-through fault occurs in the alternating current power grid, the controller controls the switch unit to be turned off or controls impedance of the switch unit to be increased. After the switch unit is turned off or the impedance of the switch unit is increased, the controller controls a modulated wave of each phase bridge arm to be a modulated wave obtained by superimposing a first common-mode modulation signal on an initial modulated wave of each phase bridge arm, to increase amplitude of the modulated wave of each phase bridge arm. The initial modulated wave of each phase bridge arm is a modulated wave of each phase bridge arm during normal operation of the PCS.

It may be understood that, when the low voltage ride-through fault occurs in the power grid, the PCS may increase the amplitude of the modulated wave of each phase bridge arm by superimposing a common-mode modulation signal on the initial modulated wave of each phase bridge arm, to increase duration for outputting a positive level or a negative level by each phase bridge arm, and reduce duration for outputting a zero level by each phase bridge arm. In other words, turn-on duration of a reference switching transistor of each phase bridge arm can be increased, and turn-on duration of a switching transistor of a zero-level loop of each phase bridge arm can be reduced, to balance losses of switching transistors of phase bridge arms. The reference switching transistor is a switching transistor that is of each phase bridge arm and that is directly connected to the positive direct current bus BUS+ or the negative direct current bus BUS-. However, if the foregoing control mode of balancing the losses of the switching transistors is directly applied to an existing PCS, the superimposed common-mode modulation signal is equivalent to being directly added to two ends of a series branch of a filter inductor and a filter capacitor that correspond to each phase bridge arm, thereby causing common-mode oscillation. In view of this, in comparison with the existing PCS, for the PCS in this application, the switch unit is added to a common-mode branch (which is located between a third end of each phase bridge arm and the bus midpoint N and includes the branch of the filter inductor and the filter capacitor that correspond to each phase bridge arm). When the low voltage ride-through fault occurs in the power grid, the switch unit is first controlled to be turned off or the impedance of the switch unit is first controlled to be increased, to disconnect the common-mode branch or increase impedance of the common-mode branch, thereby directly avoiding generation of the common-mode oscillation or mitigating a common-mode oscillation phenomenon. In addition, after the switch unit is turned off or the impedance of the switch unit is increased, the losses of the switching transistors of the phase bridge arms are balanced by superimposing the common-mode modulation signal on the initial modulated wave of each phase bridge arm. Therefore, when the low voltage ride-through fault occurs in the power grid, the PCS can balance the losses of the switching transistors of the phase bridge arms, and improve common-mode oscillation caused by a change of the modulated wave, thereby facilitating stable operation of the PCS.

The foregoing is merely an example of the application scenario of the power conversion apparatus provided in this application, but is not exhaustive. The application scenario is not limited in this application.

This application mainly optimizes the control mode of the power conversion apparatus in a scenario in which the ride-through fault occurs in the power grid. Specifically, in this application, the scenario in which the ride-through fault occurs is classified into two types. One type is a scenario in which the low voltage ride-through fault occurs in the power grid, and a modulation index is reduced. Consequently, losses of switching transistors of zero-level loops of the inverter bridge arms are increased. The other type is a scenario in which a high voltage ride-through fault occurs in the power grid, and a modulation index is increased. Consequently, losses of reference switching transistors of the inverter bridge arms are increased. The power conversion apparatus provided in this application can resolve problems that losses of some switching transistors are increased in the foregoing two scenarios, so that the power conversion apparatus operates stably.

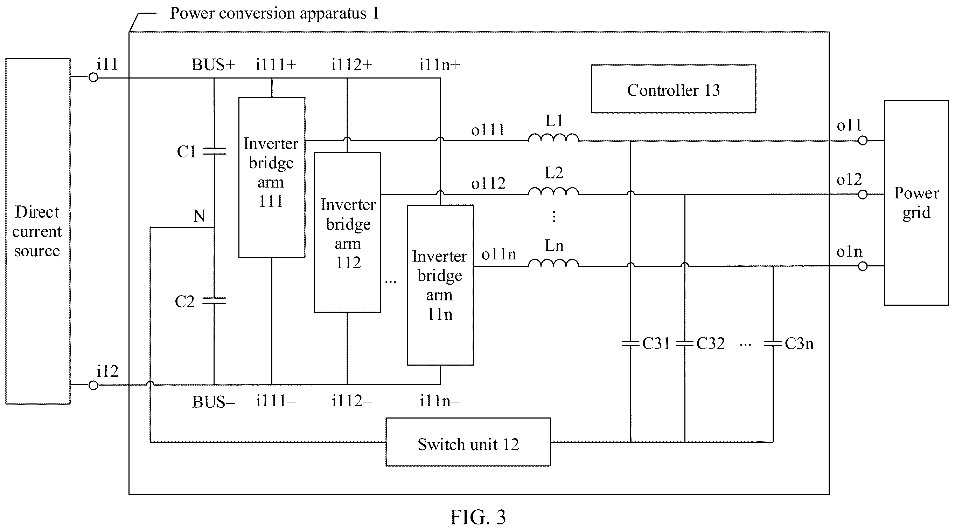

With reference to FIG. 3 to FIG. 6, the following describes an example of a working principle of a power conversion apparatus provided in this application.

FIG. 3 is a diagram of a structure of a power conversion apparatus according to this application. As shown in FIG. 3, the power conversion apparatus 1 includes direct current ends (including a direct current end i11 and a direct current end i12); a positive direct current bus BUS+; a negative direct current bus BUS-; a positive bus capacitor C1; a negative bus capacitor C2; an inverter bridge arm 111, an inverter bridge arm 112, ..., and an inverter bridge arm 11n; a switch unit 12; a controller 13; a filter inductor L1, a filter inductor L2, ..., and a filter inductor Ln; a filter capacitor C31, a filter capacitor C32, ..., and a filter capacitor C3n; and alternating current ends (including an alternating current end o11, an alternating current end o12, ..., and an alternating current end o1n). The inverter bridge arm 111 corresponds to the filter inductor L1, the filter capacitor C31, and the alternating current end o11; the inverter bridge arm 112 corresponds to the filter inductor L2, the filter capacitor C32, and the alternating current end o12; ...; and the inverter bridge arm 11n corresponds to the filter inductor Ln, the filter capacitor C3n, and the alternating current end oln. Herein, the direct current end i11 and the direct current end i12 shown in FIG. 3 are merely simple schematics of a positive direct current end and a negative direct current end of the power conversion apparatus 1, and do not represent actual quantities of positive direct current ends and negative direct current ends of the power conversion apparatus 1. During actual application, the power conversion apparatus 1 has a plurality of groups of direct current ends, and one group of direct current ends includes one positive direct current end and one negative direct current end.

The direct current end i11 and the direct current end i12 of the power conversion apparatus 1 are configured to connect to a direct current source (including a photovoltaic module, an energy storage battery, a capacitor, and the like), and the alternating current ends o11 to o1n of the power conversion apparatus 1 are configured to connect to a power grid. The positive direct current bus BUS+ is connected to the direct current end i11 of the power conversion apparatus 1, and the negative direct current bus BUS- is connected to the direct current end i12 of the power conversion apparatus 1. The positive bus capacitor C1 and the negative bus capacitor C2 are sequentially connected in series between the positive direct current bus BUS+ and the negative direct current bus BUS-. A first end i111+ of the inverter bridge arm 111 is connected to the positive direct current bus BUS+, a second end i111- of the inverter bridge arm 111 is connected to the negative direct current bus BUS-, and a third end o111 of the inverter bridge arm 111 is connected to the bus midpoint N after sequentially passing through the filter inductor L1, the filter capacitor C31, and the switch unit 12; a first end i112+ of the inverter bridge arm 112 is connected to the positive direct current bus BUS+, a second end i112- of the inverter bridge arm 112 is connected to the negative direct current bus BUS-, and a third end o112 of the inverter bridge arm 112 is connected to the bus midpoint N after sequentially passing through the filter inductor L2, the filter capacitor C32, and the switch unit 12; ...; and a first end i11n+ of the inverter bridge arm 11n is connected to the positive direct current bus BUS+, a second end i11n- of the inverter bridge arm 11n is connected to the negative direct current bus BUS-, and a third end o11n of the inverter bridge arm 11n is connected to the bus midpoint N after sequentially passing through the filter inductor Ln, the filter capacitor C3n, and the switch unit 12. A serial connection point between the filter inductor L1 and the filter capacitor C31 is configured to connect to the alternating current end o11 of the power conversion apparatus 1; a serial connection point between the filter inductor L2 and the filter capacitor C32 is configured to connect to the alternating current end o12 of the power conversion apparatus 1; ...; and a serial connection point between the filter inductor Ln and the filter capacitor C3n is configured to connect to the alternating current end oln of the power conversion apparatus 1. Optionally, a filter circuit including a filter inductor and a filter capacitor that correspond to each inverter bridge arm may be replaced with an LCL filtering network. A DC/DC converter may be further connected between the power conversion apparatus 1 and the direct current source. In this case, the bus midpoint N of the power conversion apparatus 1 is connected to an N wire of the DC/DC converter.

Herein, n is an integer greater than or equal to 3, and usually, n is 3 or 4. When n=3, three inverter bridge arms of the power conversion apparatus 1 are: an A-phase bridge arm, a B-phase bridge arm, and a C-phase bridge arm, and the power conversion apparatus 1 is a three-phase three-wire power conversion apparatus. When n=4, four inverter bridge arms of the power conversion apparatus 1 are: an A-phase bridge arm, a B-phase bridge arm, a C-phase bridge arm, and an N-phase bridge arm, and the power conversion apparatus 1 is a three-phase four-wire power conversion apparatus. In addition, the inverter bridge arms 111 to 11n may use multi-level inversion topologies, including but not limited to a two-level inversion topology, an NPC three-level inversion topology, an ANPC three-level inversion topology, and a T-type three-level inversion topology.

In an implementation scenario, in a process in which the power conversion apparatus 1 supplies power to the power grid, when a voltage of the power grid is less than or equal to a first voltage threshold, which indicates that a low voltage ride-through fault occurs in the power grid, the controller 13 controls the switch unit 12 to be turned off or controls impedance of the switch unit 12 to be increased. After the switch unit 12 is turned off or the impedance of the switch unit 12 is increased, the controller 13 controls a modulated wave of each of the inverter bridge arms 111 to 11n to be a modulated wave obtained by superimposing a first common-mode modulation signal on an initial modulated wave of each inverter bridge arm, to increase amplitude of the modulated wave of each inverter bridge arm. The initial modulated wave of each inverter bridge arm is a modulated wave of each inverter bridge arm during normal operation of the power conversion apparatus 1. Herein, that the power conversion apparatus 1 operates normally means that a voltage at the alternating current end of the power conversion apparatus 1 is basically consistent with the voltage of the power grid operating normally. In other words, that the power conversion apparatus 1 operates normally means that the voltage at the alternating current end of the power conversion apparatus 1 is within a normal voltage range of the power grid. The normal voltage range of the power grid may be specifically greater than the first voltage threshold and less than a second voltage threshold. The first voltage threshold is less than a rated voltage of the power grid, the second voltage threshold is greater than the rated voltage of the power grid, and specific settings of the first voltage threshold and the second voltage threshold may be adjusted based on an actual operation requirement. For example, the first voltage threshold is 0.9 times the rated voltage of the power grid, and the second voltage threshold is 1.1 times the rated voltage of the power grid. In addition, the initial modulated wave of each inverter bridge arm includes a discontinuous pulse width modulation (DPWM) wave, a sinusoidal pulse width modulation (SPWM) wave, or a space vector pulse width modulation (SVPWM) wave.

It may be understood that, when the low voltage ride-through fault occurs in the power grid, the power conversion apparatus 1 disconnects a common-mode branch or increases impedance of a common-mode branch by controlling the switch unit 12, thereby directly avoiding generation of common-mode oscillation or mitigating a common-mode oscillation phenomenon. The power conversion apparatus 1 increases the amplitude of the modulated wave of each inverter bridge arm by superimposing the first common-mode modulation signal on the initial modulated wave of each inverter bridge arm, that is, increases amplitude of a modulated wave of a reference switching transistor of each inverter bridge arm. The amplitude of the modulated wave of the reference switching transistor determines duration for outputting a positive level or a negative level by the inverter bridge arm. Specifically, larger amplitude of the modulated wave of the reference switching transistor indicates a larger duty cycle of the reference switching transistor and longer turn-on duration of the reference switching transistor, that is, longer duration for outputting the positive level or the negative level by the inverter bridge arm; and smaller amplitude of the modulated wave of the reference switching transistor indicates a smaller duty cycle of the reference switching transistor and shorter turn-on duration of the reference switching transistor, that is, shorter duration for outputting the positive level or the negative level by the inverter bridge arm. Because duration for outputting a zero level by the inverter bridge arm is negatively correlated with the duration for outputting the positive level or negative level, the power conversion apparatus 1 may increase duration for outputting the positive level or the negative level by each inverter bridge arm by increasing the amplitude of the modulated wave of each inverter bridge arm, and reduce duration for outputting the zero level by each inverter bridge arm. In other words, turn-on duration of the reference switching transistor of each inverter bridge arm can be increased, and turn-on duration of a switching transistor of a zero-level loop of each inverter bridge arm can be reduced, to balance losses of switching transistors of inverter bridge arms.

In another implementation scenario, in a process in which the power conversion apparatus 1 supplies power to the power grid, when a voltage of the power grid is greater than or equal to a second voltage threshold, which indicates that a high voltage ride-through fault occurs in the power grid, the controller 13 controls the switch unit 12 to be turned off or controls impedance of the switch unit 12 to be increased. After the switch unit 12 is turned off or the impedance of the switch unit 12 is increased, the controller 13 controls a modulated wave of each of the inverter bridge arms 111 to 11n to be a modulated wave obtained by superimposing a second common-mode modulation signal on an initial modulated wave of each inverter bridge arm, to reduce amplitude of the modulated wave of each inverter bridge arm. The initial modulated wave of each inverter bridge arm is a modulated wave of each inverter bridge arm during normal operation of the power conversion apparatus 1. Both a first common-mode modulation signal and the second common-mode modulation signal may be understood as common-mode voltages, and the second common-mode modulation signal and the first common-mode modulation signal have different shapes and amplitude.

It may be understood that, when the high voltage ride-through fault occurs in the power grid, the power conversion apparatus 1 disconnects a common-mode branch or increases impedance of a common-mode branch by controlling the switch unit 12, thereby directly avoiding generation of common-mode oscillation or mitigating a common-mode oscillation phenomenon. The power conversion apparatus 1 reduces the amplitude of the modulated wave of each inverter bridge arm by superimposing the second common-mode modulation signal on the initial modulated wave of each inverter bridge arm, to reduce duration for outputting a positive level or a negative level by each inverter bridge arm, and increase duration for outputting a zero level by each inverter bridge arm. In other words, turn-on duration of a switching transistor that is of each inverter bridge arm and that is directly connected to a direct current bus can be reduced, and turn-on duration of a switching transistor of a zero-level loop of each inverter bridge arm can be increased, to balance losses of switching transistors of inverter bridge arms.

In this application, when the ride-through fault occurs in the power grid, the power conversion apparatus 1 may control the switch unit 12 to disconnect the common-mode branch or increase the impedance of the common-mode branch, to improve common-mode oscillation. In this way, the amplitude of the modulated wave of each inverter bridge arm is changed by superimposing the common-mode modulation signal on the initial modulated wave of each inverter bridge arm, to balance the losses of the switching transistors of the inverter bridge arms. In addition, because common-mode modulation signals injected to the inverter bridge arms are the same, and a line voltage (that is, a difference between bridge arm phase voltages output by two inverter bridge arms) is used to supply power to the power grid, a function of the common-mode modulation signal may be canceled, and the power supplied to the power grid is not affected.

Regardless of a value of n being greater than or equal to 3, working principles of the power conversion apparatus 1 are the same. Therefore, for ease of description, the following uses n=3 as an example for description.

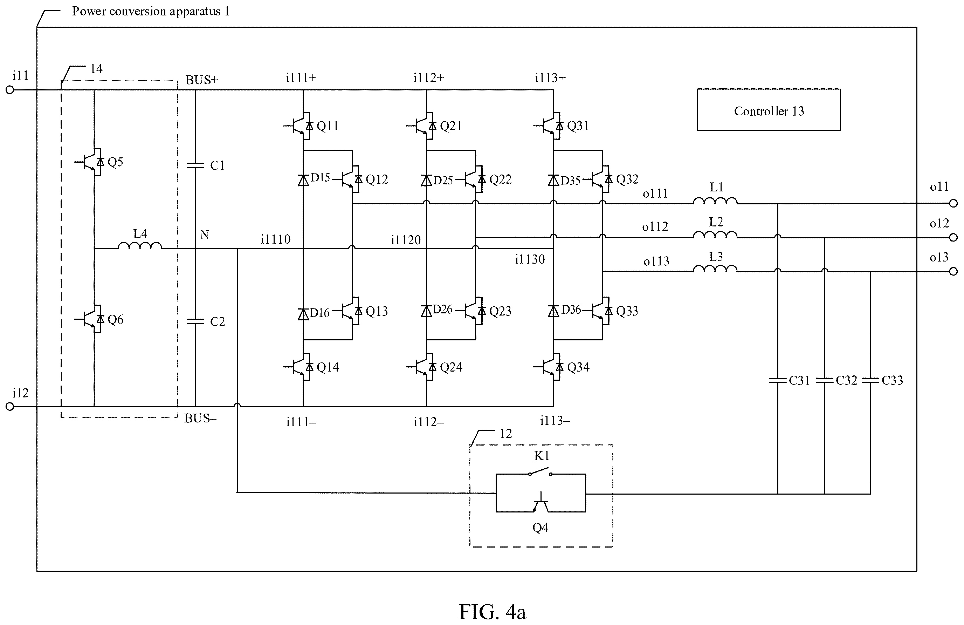

For example, FIG. 4a is a diagram of another structure of a power conversion apparatus according to this application. As shown in FIG. 4a, the inverter bridge arms 111 to 113 use an NPC three-level inversion topology. Specifically, the inverter bridge arm 111 includes a first switching transistor Q11, a second switching transistor Q12, a third switching transistor Q13, a fourth switching transistor Q14, a clamp diode D15, and a clamp diode D16; the inverter bridge arm 112 includes a first switching transistor Q21, a second switching transistor Q22, a third switching transistor Q23, a fourth switching transistor Q24, a clamp diode D25, and a clamp diode D26; and the inverter bridge arm 113 includes a first switching transistor Q31, a second switching transistor Q32, a third switching transistor Q33, a fourth switching transistor Q34, a clamp diode D35, and a clamp diode D36. A switching transistor of each inverter bridge arm may be understood as a semiconductor switch, including a metal-oxide-semiconductor field-effect transistor (MOSFET), an insulated gate bipolar transistor (IGBT), a gallium nitride (GaN) transistor, or the like. The following uses the IGBT as an example of the switching transistor for description. The first switching transistor Q11, the second switching transistor Q12, the third switching transistor Q13, and the fourth switching transistor Q14 are sequentially connected in series between the first end i111+ and the second end i111- of the inverter bridge arm 111. Specifically, a collector of the first switching transistor Q11 is connected to the first end i111+ of the inverter bridge arm 111, an emitter of the first switching transistor Q11 is connected to a collector of the fourth switching transistor Q14 after sequentially passing through the second switching transistor Q12 and the third switching transistor Q13, and an emitter of the fourth switching transistor Q14 is connected to the second end i111- of the inverter bridge arm 111. A connection point between the second switching transistor Q12 and the third switching transistor Q13 is connected to the third end o111 of the inverter bridge arm 111. A cathode of the clamp diode D15 is connected to a collector of the second switching transistor Q12, an anode of the clamp diode D15 is connected to a cathode of the clamp diode D16 and the fourth end i1110 of the inverter bridge arm 111, and an anode of the clamp diode D16 is connected to an emitter of the third switching transistor Q13. The first switching transistor Q21, the second switching transistor Q22, the third switching transistor Q23, and the fourth switching transistor Q24 are sequentially connected in series between the first end i112+ and the second end i112- of the inverter bridge arm 112. Specifically, a collector of the first switching transistor Q21 is connected to the first end i112+ of the inverter bridge arm 112, an emitter of the first switching transistor Q21 is connected to a collector of the fourth switching transistor Q24 after sequentially passing through the second switching transistor Q22 and the third switching transistor Q23, and an emitter of the fourth switching transistor Q24 is connected to the second end i112- of the inverter bridge arm 112. A connection point between the third switching transistor Q23 and the fourth switching transistor Q24 is connected to the third end o112 of the inverter bridge arm 112. A cathode of the clamp diode D25 is connected to a collector of the second switching transistor Q22, an anode of the clamp diode D25 is connected to a cathode of the clamp diode D26 and the fourth end i1120 of the inverter bridge arm 112, and an anode of the clamp diode D26 is connected to an emitter of the third switching transistor Q23. The first switching transistor Q31, the second switching transistor Q32, the third switching transistor Q33, and the fourth switching transistor Q34 are sequentially connected in series between the first end i113+ and the second end i113- of the inverter bridge arm 113. Specifically, a collector of the first switching transistor Q31 is connected to the first end i113+ of the inverter bridge arm 113, an emitter of the first switching transistor Q31 is connected to a collector of the fourth switching transistor Q34 after sequentially passing through the second switching transistor Q32 and the third switching transistor Q33, and an emitter of the fourth switching transistor Q34 is connected to the second end i113- of the inverter bridge arm 113. A connection point between the third switching transistor Q33 and the fourth switching transistor Q34 is connected to the third end o113 of the inverter bridge arm 113. A cathode of the clamp diode D35 is connected to a collector of the second switching transistor Q32, an anode of the clamp diode D35 is connected to a cathode of the clamp diode D36 and the fourth end i1130 of the inverter bridge arm 113, and an anode of the clamp diode D36 is connected to an emitter of the third switching transistor Q33. In addition, the fourth end i1110 of the inverter bridge arm 111, the fourth end i1120 of the inverter bridge arm 112, and the fourth end i1130 of the inverter bridge arm 113 are all connected to the bus midpoint N. In addition, the switch unit 12 includes a mechanical switch K1 and a semiconductor switch Q4 that are connected in parallel. The mechanical switch herein includes but is not limited to a relay, a contactor, and the like. Herein, for specific connection relationships of parts other than the inverter bridge arms 111 to arm 113 and the switch unit 12 of the power conversion apparatus 1 shown in FIG. 4a, refer to descriptions of corresponding parts of the power conversion apparatus 1 shown in FIG. 3. Details are not described herein again.

Specifically, after the power conversion apparatus 1 is connected to the grid, the switch unit 12 is turned on. Specifically, the mechanical switch K1 is in a turn-on state, and the semiconductor switch Q4 is in a turn-off state. The controller 13 obtains a voltage of the power grid in real time after the power conversion apparatus 1 is connected to the grid, and controls the semiconductor switch Q4 to be turned on when the voltage of the power grid is less than or equal to a first voltage threshold or greater than or equal to a second voltage threshold. In addition, after the semiconductor switch Q4 is turned on, the controller 13 controls the mechanical switch K1 to be turned off first, and controls the semiconductor switch Q4 to be turned off later, to control the switch unit 12 to be turned off, and disconnect a common-mode branch, thereby completely resolving common-mode oscillation caused by subsequent superposition of a common-mode modulation signal. In addition, for a specific operation performed by the controller 13 after the switch unit 12 is turned off, refer to descriptions of a corresponding part in the embodiment shown in FIG. 3. Details are not described herein again. It may be understood that, when the power conversion apparatus 1 controls the switch unit 12 to be turned off, an implementation in which the mechanical switch K1 is turned off earlier than the semiconductor switch Q4 is used, so that an on-state loss of the semiconductor switch Q4 can be effectively reduced.

In addition, when the voltage of the power grid is greater than the first voltage threshold and less than the second voltage threshold, which indicates that the voltage of the power grid is restored to normal, the controller 13 controls the switch unit 12 to be turned on. Specifically, the controller 13 controls the semiconductor switch Q4 to be turned on first, and controls the mechanical switch K1 to be turned on later, to enable the common-mode branch to be restored to a conductive state. After the switch unit 12 is turned on, that is, after the mechanical switch K1 is turned on, the controller 13 controls the modulated wave of each of the inverter bridge arms 111 to 113 to be the initial modulated wave of each inverter bridge arm, and controls the semiconductor switch Q4 to be turned off. It may be understood that, after the voltage of the power grid is restored to normal, a problem that losses of some switching transistors of each inverter bridge arm increase disappears accordingly, and it is unnecessary to superimpose the common-mode modulation signal on the initial modulated wave of each inverter bridge arm, to enable the common-mode branch to be restored to the conductive state, so that the power conversion apparatus 1 is restored to an operating state with the voltage of the power grid being normal. In addition, when the power conversion apparatus 1 controls the switch unit 12 to be turned on, an implementation in which the mechanical switch K1 is turned on later than the semiconductor switch Q4 is used, so that the on-state loss of the semiconductor switch Q4 can be effectively reduced.

Optionally, the power conversion apparatus 1 may further include a bus voltage balancing circuit. The bus voltage balancing circuit is configured to: when there is a deviation between a voltage of the positive bus capacitor C1 and a voltage of the negative bus capacitor C2, transfer electric energy stored in a bus capacitor with a higher voltage in the positive bus capacitor C1 and the negative bus capacitor C2 to a bus capacitor with a lower voltage. For example, the bus voltage balancing circuit 14 includes a seventh switching transistor Q5, an eighth switching transistor Q6, and an inductor L4. The seventh switching transistor Q5 and the eighth switching transistor Q6 are sequentially connected in series between the positive direct current bus BUS+ and the negative direct current bus BUS-, and the inductor L4 is connected between the bus midpoint N and a connection point between the seventh switching transistor Q5 and the eighth switching transistor Q6. Optionally, the inductor L4 may be replaced with another energy storage element, for example, a capacitor or a combination of an inductor and a capacitor.

In an implementation, when the voltage of the positive bus capacitor C1 is greater than the voltage of the negative bus capacitor C2, the controller 13 controls the seventh switching transistor Q5 to be turned on for first preset duration and then turned off, to transfer energy stored in the positive bus capacitor C1 to the inductor L4. After the seventh switching transistor Q5 is turned off, the controller 13 controls the eighth switching transistor Q6 to be turned on for second preset duration and then turned off, to transfer energy stored in the inductor L4 to the negative bus capacitor C2, thereby transferring the energy stored in the positive bus capacitor C1 to the negative bus capacitor C2.

In another implementation, when the voltage of the positive bus capacitor C1 is less than the voltage of the negative bus capacitor C2, the controller 13 controls the eighth switching transistor Q6 to be turned on for third preset duration and then turned off, to transfer energy stored in the negative bus capacitor C2 to the inductor L4. After the eighth switching transistor Q6 is turned off, the controller 13 controls the seventh switching transistor Q5 to be turned on for fourth preset duration and then turned off, to transfer energy stored in the inductor L4 to the positive bus capacitor C1, thereby transferring the energy stored in the negative bus capacitor C2 to the positive bus capacitor C1.

It may be understood that the power conversion apparatus 1 may control turn-on duration of two switching transistors of the bus voltage balancing circuit, to balance the voltage of the positive bus capacitor C1 and the voltage of the negative bus capacitor C2. In this way, a switching transistor with a lower voltage withstand capability can be selected, thereby reducing costs of the power conversion apparatus 1.

In this embodiment of this application, when the ride-through fault occurs in the power grid, the power conversion apparatus 1 may disconnect the common-mode branch by controlling the switch unit 12 to be disconnected, to completely resolve the common-mode oscillation caused by the subsequent superposition of the common-mode modulation signal. In this way, the amplitude of the modulated wave of each inverter bridge arm is changed by superimposing the common-mode modulation signal on the initial modulated wave of each inverter bridge arm, to balance the losses of the switching transistors of the inverter bridge arms. In addition, because the switch unit 12 uses a structure in which the mechanical switch and the semiconductor switch are connected in parallel, and when controlling an action of the switch unit 12, the power conversion apparatus 1 controls the mechanical switch to be turned off earlier than the semiconductor switch and turned on later than the semiconductor switch, so that the on-state loss of the semiconductor switch can be effectively reduced, thereby reducing a loss of the power conversion apparatus 1.

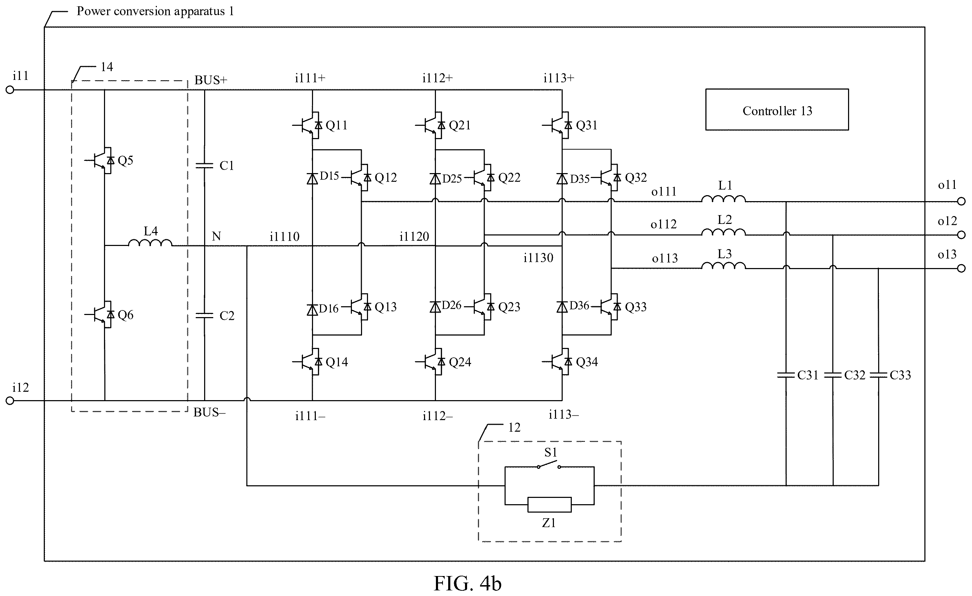

For example, FIG. 4b is a diagram of another structure of a power conversion apparatus according to this application. As shown in FIG. 4b, in comparison with the power conversion apparatus 1 shown in FIG. 4a, only switch units 12 of the power conversion apparatus 1 and the power conversion apparatus are different. Specifically, the switch unit 12 shown in FIG. 4b includes a switch component S1 and an impedance element Z1 that are connected in parallel, the switch component S1 includes a mechanical switch or a semiconductor switch, and the impedance element Z1 includes an inductor, a capacitor, or a resistor.

Specifically, after the power conversion apparatus 1 is connected to a grid, the switch unit 12 is turned on. Specifically, the switch component S1 is in a turn-on state. The controller 13 obtains a voltage of the power grid in real time after the power conversion apparatus 1 is connected to the grid, and controls the switch component S1 to be turned off when the voltage of the power grid is less than or equal to a first voltage threshold or greater than or equal to a second voltage threshold, to control the impedance of the switch unit 12 to be increased. In this way, impedance of a common-mode branch is increased, to enable the common-mode branch to be in a high impedance state, thereby improving common-mode oscillation caused by subsequent superposition of a common-mode modulation signal. During practical application, improvement effect of the common-mode oscillation is determined by an impedance value of the impedance element Z1. To maximize improvement effect of the common-mode oscillation, the impedance element Z1 usually selects a resistor with a large resistance value, an inductor with a large inductance value, or a capacitor with a small capacitance value, so that the common-mode branch reaches a state similar to a disconnected state.

In addition, when the voltage of the power grid is greater than the first voltage threshold and less than the second voltage threshold, which indicates that the voltage of the power grid is restored to normal, the controller 13 controls the switch unit 12 to be turned on. Specifically, the controller 13 controls the switch component S1 to be turned on, to enable the common-mode branch to be restored to a low impedance state. After the switch unit 12 is turned on, that is, after the switch component S1 is turned on, the controller 13 controls the modulated wave of each of the inverter bridge arms 111 to 113 to be the initial modulated wave of each inverter bridge arm. It may be understood that, after the voltage of the power grid is restored to normal, a problem that losses of some switching transistors of each inverter bridge arm increase disappears accordingly, and it is unnecessary to superimpose the common-mode modulation signal on the initial modulated wave of each inverter bridge arm, to enable the common-mode branch to be restored to the low impedance state, so that the power conversion apparatus 1 is restored to an operating state with the voltage of the power grid being normal.

Herein, for a specific operation performed by the controller 13 after the switch unit 12 is turned off and a specific operation for balancing bus voltages, refer to descriptions of corresponding parts in embodiments shown in FIG. 3 and FIG. 4a. Details are not described herein again.

In this embodiment of this application, when a ride-through fault occurs in the power grid, the power conversion apparatus 1 may increase the impedance of the common-mode branch by connecting the impedance element Z1 of the switch unit 12 to the common-mode branch, to improve the common-mode oscillation caused by the subsequent superposition of the common-mode modulation signal. In this way, amplitude of a modulated wave of each inverter bridge arm is changed by superimposing the common-mode modulation signal on the initial modulated wave of each inverter bridge arm, to balance losses of switching transistors of inverter bridge arms. In addition, the switch unit 12 uses a structure in which the switch component and the impedance element are connected in parallel. The power conversion apparatus 1 can improve the common-mode oscillation by only controlling the switch component. A control mode is simple and easy to implement.

It should be noted that the switch unit 12 in this application is any circuit configured to implement on-off control on the common-mode branch, or control switching between the high impedance state and the low impedance state of the common-mode branch. In addition to the specific structures shown in FIG. 4a and FIG. 4b, a switch circuit that clamps a fixed potential point may be further included.

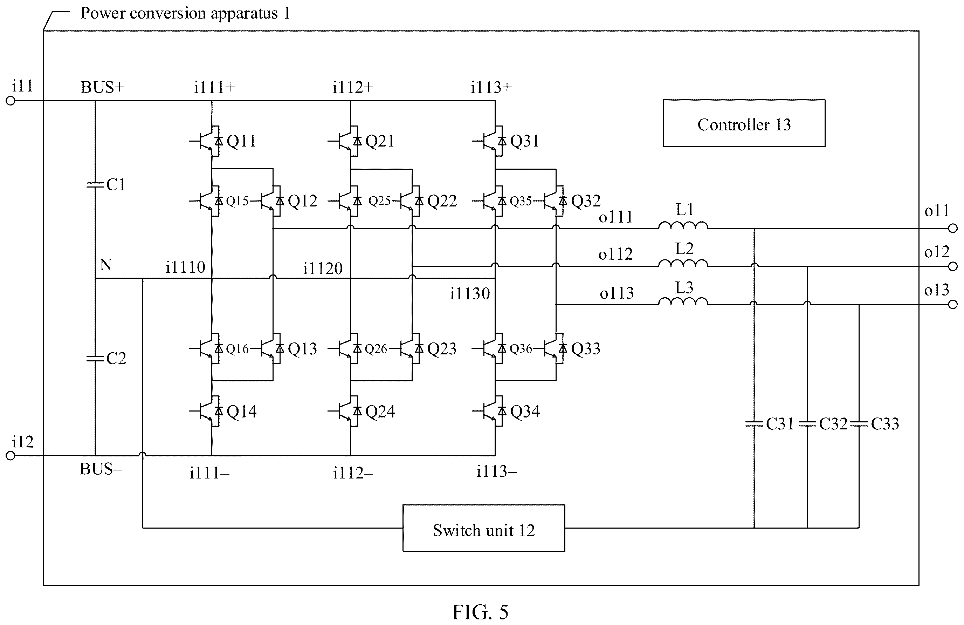

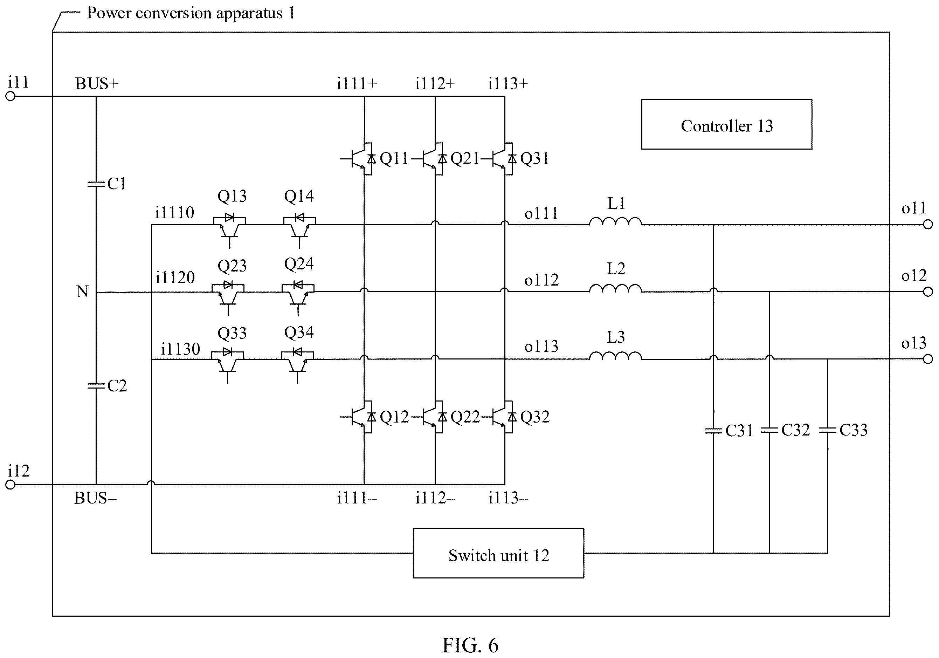

In addition, the structures, of the switch units, that are of the power conversion apparatus 1 and that are used to balance switching losses, the structures for balancing the bus voltages, and the control modes of the power conversion apparatus 1 that are shown in FIG. 4a and FIG. 4b are also applicable to the power conversion apparatus 1 shown in FIG. 5 and FIG. 6.

As shown in FIG. 5, the inverter bridge arms 111 to 113 use an ANPC three-level inversion topology. Each inverter bridge arm shown in FIG. 5 is equivalent to a bridge arm obtained by replacing two clamp diodes of each inverter bridge arm shown in FIG. 4a with a fifth switching transistor and a sixth switching transistor. Specifically, a fifth switching transistor Q15 and a sixth switching transistor Q16 of the inverter bridge arm 111 are connected in series between a connection point between the first switching transistor Q11 and the second switching transistor Q12 and a connection point between the third switching transistor Q13 and the fourth switching transistor Q14, and a connection point between the fifth switching transistor Q15 and the sixth switching transistor Q16 is connected to the fourth end i1110 of the inverter bridge arm 111. A fifth switching transistor Q25 and a sixth switching transistor Q26 of the inverter bridge arm 112 are connected in series between a connection point between the first switching transistor Q21 and the second switching transistor Q22 and a connection point between the third switching transistor Q23 and the fourth switching transistor Q24, and a connection point between the fifth switching transistor Q25 and the sixth switching transistor Q26 is connected to the fourth end i1120 of the inverter bridge arm 112. A fifth switching transistor Q35 and a sixth switching transistor Q36 of the inverter bridge arm 113 are connected in series between a connection point between the first switching transistor Q31 and the second switching transistor Q32 and a connection point between the third switching transistor Q33 and the fourth switching transistor Q34, and a connection point between the fifth switching transistor Q35 and the sixth switching transistor Q36 is connected to the fourth end i1130 of the inverter bridge arm 113. Herein, for specific descriptions of connection relationships and control modes of parts other than the inverter bridge arms of the power conversion apparatus 1 shown in FIG. 5, refer to descriptions of corresponding parts of the power conversion apparatus 1 shown in FIG. 4a and FIG. 4b. Details are not described herein again.

As shown in FIG. 6, the inverter bridge arms 111 to 113 use a T-type three-level inversion topology. Specifically, the inverter bridge arm 111 includes the first switching transistor Q11, the second switching transistor Q12, the third switching transistor Q13, and the fourth switching transistor Q14; the inverter bridge arm 112 includes the first switching transistor Q21, the second switching transistor Q22, the third switching transistor Q23, and the fourth switching transistor Q24; and the inverter bridge arm 113 includes the first switching transistor Q31, the second switching transistor Q32, the third switching transistor Q33, and the fourth switching transistor Q34. A switching transistor of each inverter bridge arm may be understood as a semiconductor switch, including a MOSFET, an IGBT, a GaN transistor, or the like. An example in which the switching transistor is the IGBT is used below for description. The collector of the first switching transistor Q11 is connected to the first end i111+ of the inverter bridge arm 111, the emitter of the first switching transistor Q11 is connected to the second end i111- of the inverter bridge arm 111 via the second switching transistor Q12, and the emitter of the first switching transistor Q11 is connected to the third end o111 of the inverter bridge arm 111. The third switching transistor Q13 and the fourth switching transistor Q14 are reversely connected in series between the third end o111 and the fourth end i1110 of the inverter bridge arm 111. Specifically, the emitter of the fourth switching transistor Q14 is connected to the third end o111 of the inverter bridge arm 111, the collector of the fourth switching transistor Q14 is connected to the collector of the third switching transistor Q13, and the emitter of the third switching transistor Q13 is connected to the fourth end i1110 of the inverter bridge arm 111. The collector of the first switching transistor Q21 is connected to the first end i112+ of the inverter bridge arm 112, the emitter of the first switching transistor Q21 is connected to the second end i112 of the inverter bridge arm 112 via the second switching transistor Q22, and the emitter of the first switching transistor Q21 is connected to the third end o112 of the inverter bridge arm 112. The third switching transistor Q23 and the fourth switching transistor Q24 are reversely connected in series between the third end o112 and the fourth end i1120 of the inverter bridge arm 112. Specifically, the emitter of the fourth switching transistor Q24 is connected to the third end o112 of the inverter bridge arm 112, the collector of the fourth switching transistor Q24 is connected to the collector of the third switching transistor Q23, and the emitter of the third switching transistor Q23 is connected to the fourth end i1120 of the inverter bridge arm 112. The collector of the first switching transistor Q31 is connected to the first end i113+ of the inverter bridge arm 113, the emitter of the first switching transistor Q31 is connected to the second end i113- of the inverter bridge arm 113 via the second switching transistor Q32, and the emitter of the first switching transistor Q31 is connected to the third end o113 of the inverter bridge arm 113. The third switching transistor Q33 and the fourth switching transistor Q34 are reversely connected in series between the third end o113 and the fourth end i1130 of the inverter bridge arm 113. Specifically, the emitter of the fourth switching transistor Q34 is connected to the third end o113 of the inverter bridge arm 113, the collector of the fourth switching transistor Q34 is connected to the collector of the third switching transistor Q33, and the emitter of the third switching transistor Q33 is connected to the fourth end i1130 of the inverter bridge arm 113. In addition, the fourth end i1110 of the inverter bridge arm 111, the fourth end i1120 of the inverter bridge arm 112, and the fourth end i1130 of the inverter bridge arm 113 are all connected to the bus midpoint N. Herein, for specific descriptions of connection relationships and control modes of parts other than the inverter bridge arms of the power conversion apparatus 1 shown in FIG. 6, refer to descriptions of corresponding parts of the power conversion apparatus 1 shown in FIG. 4a and FIG. 4b. Details are not described herein again.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A power conversion apparatus, wherein the power conversion apparatus comprises a direct current end, a positive direct current bus, a negative direct current bus, a positive bus capacitor, a negative bus capacitor, at least three inverter bridge arms, a switch unit, a controller, and filter inductors, filter capacitors, and alternating current ends that correspond to the at least three inverter bridge arms, wherein
the direct current end is configured to connect to a photovoltaic module or an energy storage battery, and the alternating current ends corresponding to the at least three inverter bridge arms are configured to connect to a power grid;
the positive direct current bus and the negative direct current bus are connected to the direct current end, and the positive bus capacitor and the negative bus capacitor are sequentially connected in series between the positive direct current bus and the negative direct current bus;
a first end and a second end of each of the at least three inverter bridge arms are respectively connected to the positive direct current bus and the negative direct current bus, a third end of each inverter bridge arm is connected to a bus midpoint after sequentially passing through a filter inductor and a filter capacitor that correspond to each inverter bridge arm, and the switch unit, the bus midpoint is a connection point between the positive bus capacitor and the negative bus capacitor, and serial connection points of the filter inductors and the filter capacitors corresponding to the at least three inverter bridge arms are respectively configured to connect the alternating current ends corresponding to the at least three inverter bridge arms; and
the controller is configured to: when a voltage of the power grid is less than or equal to a first voltage threshold, control the switch unit to be turned off or impedance of the switch unit to be increased; and after the switch unit is turned off or the impedance of the switch unit is increased, control a modulated wave of each inverter bridge arm to be a modulated wave obtained by superimposing a first common-mode modulation signal on an initial modulated wave of each inverter bridge arm, to increase amplitude of the modulated wave of each inverter bridge arm, wherein the initial modulated wave is a modulated wave of each inverter bridge arm during normal operation of the power conversion apparatus.

2. The power conversion apparatus according to claim 1, wherein the controller is further configured to: when the voltage of the power grid is greater than or equal to a second voltage threshold, control the switch unit to be turned off or the impedance of the switch unit to be increased; and after the switch unit is turned off or the impedance of the switch unit is increased, control the modulated wave of each inverter bridge arm to be a modulated wave obtained by superimposing a second common-mode modulation signal on the initial modulated wave of each inverter bridge arm, to reduce the amplitude of the modulated wave of each inverter bridge arm, wherein the second voltage threshold is greater than the first voltage threshold.

3. The power conversion apparatus according to claim 1 or 2, wherein the switch unit comprises a mechanical switch and a semiconductor switch that are connected in parallel; and
the controller is configured to: when the voltage of the power grid is less than or equal to the first voltage threshold or greater than or equal to the second voltage threshold, control the mechanical switch to be turned off first, and control the semiconductor switch to be turned off later.

4. The power conversion apparatus according to claim 1 or 2, wherein the switch unit comprises a switch component and an impedance element that are connected in parallel, the switch component comprises a mechanical switch or a semiconductor switch, and the impedance element comprises an inductor, a capacitor, or a resistor; and
the controller is configured to: when the voltage of the power grid is less than or equal to the first voltage threshold or greater than or equal to the second voltage threshold, control the switch component to be turned off.

5. The power conversion apparatus according to any one of claims 2 to 4, wherein the controller is further configured to: when the voltage of the power grid is greater than the first voltage threshold and less than the second voltage threshold, control the switch unit to be turned on; and after the switch unit is turned on, control the modulated wave of each inverter bridge arm to be the initial modulated wave of each inverter bridge arm.

6. The power conversion apparatus according to claim 5, wherein the switch unit comprises the mechanical switch and the semiconductor switch that are connected in parallel; and
the controller is configured to: when the voltage of the power grid is greater than the first voltage threshold and less than the second voltage threshold, control the semiconductor switch to be turned on first, and control the mechanical switch to be turned on later.

7. The power conversion apparatus according to claim 5, wherein the switch unit comprises the switch component and the impedance element that are connected in parallel, the switch component comprises the mechanical switch or the semiconductor switch, and the impedance element comprises the inductor, the capacitor, or the resistor; and
the controller is configured to: when the voltage of the power grid is greater than the first voltage threshold and less than the second voltage threshold, control the switch component to be turned on.

8. The power conversion apparatus according to any one of claims 1 to 7, wherein a fourth end of each inverter bridge arm is connected to the bus midpoint, and each inverter bridge arm comprises a first switching transistor, a second switching transistor, a third switching transistor, a fourth switching transistor, a fifth switching transistor, and a sixth switching transistor, wherein
the first switching transistor, the second switching transistor, the third switching transistor, and the fourth switching transistor of each inverter bridge arm are sequentially connected in series between the first end and the second end of each inverter bridge arm, and a connection point between the second switching transistor and the third switching transistor of each inverter bridge arm is connected to the third end of each inverter bridge arm; and
the fifth switching transistor and the sixth switching transistor of each inverter bridge arm are connected in series between a connection point of the first switching transistor and the second switching transistor of each inverter bridge arm and a connection point of the third switching transistor and the fourth switching transistor of each inverter bridge arm, and the connection point of the fifth switching transistor and the sixth switching transistor of each inverter bridge arm is connected to the fourth end of each inverter bridge arm.

9. The power conversion apparatus according to any one of claims 1 to 7, wherein a fourth end of each inverter bridge arm is connected to the bus midpoint, and each inverter bridge arm comprises a first switching transistor, a second switching transistor, a third switching transistor, and a fourth switching transistor, wherein
the first switching transistor and the second switching transistor of each inverter bridge arm are connected in series between the first end and the second end of each inverter bridge arm, and a connection point between the first switching transistor and the second switching transistor of each inverter bridge arm is connected to the third end of each inverter bridge arm; and
the third switching transistor and the fourth switching transistor of each inverter bridge arm are reversely connected in series between the third end and the fourth end of each inverter bridge arm.

10. The power conversion apparatus according to any one of claims 1 to 9, wherein the power conversion apparatus further comprises an energy storage element, a seventh switching transistor, and an eighth switching transistor, wherein the seventh switching transistor and the eighth switching transistor are sequentially connected in series between the positive direct current bus and the negative direct current bus, and the energy storage element is connected between the bus midpoint and a connection point between the seventh switching transistor and the eighth switching transistor; and
the controller is configured to: when a voltage of the positive bus capacitor is greater than a voltage of the negative bus capacitor, control the seventh switching transistor to be turned on for first preset duration and then turned off, and after the seventh switching transistor is turned off, control the eighth switching transistor to be turned on for second preset duration and then turned off, to transfer energy stored in the positive bus capacitor to the negative bus capacitor; or
the controller is configured to: when a voltage of the positive bus capacitor is less than a voltage of the negative bus capacitor, control the eighth switching transistor to be turned on for third preset duration and then turned off, and after the eighth switching transistor is turned off, control the seventh switching transistor to be turned on for fourth preset duration and then turned off, to transfer energy stored in the negative bus capacitor to the positive bus capacitor.
